# EUROPÄISCHE PATENTANMELDUNG

(11) **EP 2 143 926 A1**
(43) Veröffentlichungstag der Anmeldung: **13.01.2010**
(21) Anmeldenummer: 08105484.3
(22) Anmeldetag: 02.10.2008
(51) Int. Cl.: F02F 1/42

(54) **Kombination mit Zylinderkopf und Turbine**

(30) Priorität: 11.07.2008 EP 08104729
(71) Anmelder: Ford Global Technologies, LLC, Dearborn, MI 48126 (US)
(72) Erfinder: Kuhlbach, Kai, 51427, Bergisch Gladbach (DE)
(74) Vertreter: Drömer, Hans-Carsten

(57) **Zusammenfassung**

Die Erfindung betrifft eine Kombination (1) mit Zylinderkopf (9) und Turbine (10), bei der der Zylinderkopf (9)
- an einer Montage-Stirnseite (24) mit einem Zylinderblock verbindbar ist,
- mit einem zumindest teilweise im Zylinderkopf (9) integrierten Kühlmittelmantel (2, 2a, 2b) ausgestattet ist,
- mindestens zwei Zylinder aufweist, wobei jeder Zylinder mindestens eine Auslaßöffnung (3, 3a, 3b) zum Abführen der Abgase aus dem Zylinder aufweist und sich an jede Auslaßöffnung (3, 3a, 3b) eine Abgasleitung (4, 4a, 4b) anschließt, und bei dem
- die Abgasleitungen (4, 4a, 4b, 5) von mindestens zwei Zylindern unter Ausbildung eines integrierten Abgaskrümmers innerhalb des Zylinderkopfes (9) zu einer Gesamtabgasleitung (6) zusammenführen.

Es soll eine Kombination (1) der oben genannten Art bereitgestellt werden, die insbesondere hinsichtlich der Herstellungskosten optimiert ist.

Gelöst wird diese Aufgabe durch eine Kombination (1) der genannten Art, die dadurch gekennzeichnet ist, dass
- die ein Turbinengehäuse (16) aufweisende Turbine (10) zur Ausbildung einer Flüssigkeitskühlung mit einem Kühlmittelmantel (18) ausgestattet ist, wobei der im Zylinderkopf (9) integrierte Kühlmittelmantel (2, 2a, 2b) mit dem Kühlmittelmantel (18) der Turbine (10) verbunden ist.

## Beschreibung

Die Erfindung betrifft eine Kombination mit Zylinderkopf und Turbine, bei der der Zylinderkopf
- an einer Montage-Stirnseite mit einem Zylinderblock verbindbar ist,
- mit einem zumindest teilweise im Zylinderkopf integrierten Kühlmittelmantel ausgestattet ist,
- mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei dem
- die Abgasleitungen von mindestens zwei Zylindern unter Ausbildung eines integrierten Abgaskrümmers innerhalb des Zylinderkopfes zu einer Gesamtabgasleitung zusammenführen.

Brennkraftmaschinen verfügen über einen Zylinderblock und einen Zylinderkopf, die zur Ausbildung der einzelnen Zylinder d. h. Brennräume miteinander verbunden werden, wobei zum Verbinden im Zylinderkopf und im Zylinderblock Bohrungen vorgesehen sind. Im Rahmen der Montage werden der Zylinderblock und der Zylinderkopf durch Aufeinanderlegen ihrer Montage-Stirnseiten in der Weise zueinander angeordnet, daß die Bohrungen miteinander fluchten. Mittels Gewindebolzen, die in die Bohrungen des Zylinderkopfes und des Zylinderblocks eingeführt und verschraubt werden, wird dann eine Verbindung hergestellt.

Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus. Folglich wird ein Brennraum jeweils von einem Kolben, einem Zylinderrohr und dem Zylinderkopf mitbegrenzt und mitgestaltet. Zur Abdichtung der Brennräume wird in der Regel zwischen dem Zylinderblock und dem Zylinderkopf eine Dichtung angeordnet.

Der Zylinderkopf dient üblicherweise zur Aufnahme des Ventiltriebs. Um den Ladungswechsel zu steuern, benötigt eine Brennkraftmaschine Steuerorgane und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums d. h. das Ansaugen des Frischgemisches bzw. der Frischluft über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Ein- und Auslaßöffnungen freigeben und verschließen. Der für die Bewegung der Ventile erforderliche Ventilbetätigungsmechanismus einschließlich der Ventile selbst wird als Ventiltrieb bezeichnet.

Es ist die Aufgabe des Ventiltriebes die Einlaß- und Auslaßöffnungen der Brennkammer rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives d. h. vollständiges Abführen der Abgase zu gewährleisten. Nach dem Stand der Technik werden Brennkammern daher auch häufig und zunehmend mit zwei oder mehr Einlaß- bzw. Auslaßöffnungen ausgestattet.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Die Abgasleitungen der Auslaßöffnungen eines einzelnen Zylinders werden dabei in der Regel - innerhalb des Zylinderkopfes - zu einer dem Zylinder zugehörigen Teilabgasleitung zusammengeführt, bevor diese Teilabgasleitungen zusammengeführt werden; häufig zu einer einzelnen Gesamtabgasleitung. Die Zusammenführung von Abgasleitungen zu einer Gesamtabgasleitung wird im Rahmen der vorliegenden Erfindung als Abgaskrümmer bezeichnet.

Stromabwärts des mindestens einen Krümmers werden die Abgase dann gegebenenfalls der Turbine eines Abgasturboladers und/oder einem oder mehreren Abgasnachbehandlungssystemen zugeführt.

Dabei ist man zum einen bemüht, den bzw. die Abgasturbolader möglichst nahe am Auslaß der Brennkraftmaschine anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zum anderen soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

In diesem Zusammenhang ist man daher grundsätzlich bemüht, die thermische Trägheit des Teilstücks der Abgasleitung zwischen Auslaßöffnung am Zylinder und Abgasnachbehandlungssystem bzw. zwischen Auslaßöffnung am Zylinder und Turbine zu minimieren, was durch Reduzierung der Masse und der Länge dieses Teilstückes erreicht werden kann.

Um die zuvor genannten Ziele zu erreichen, werden gemäß einem Lösungsansatz nach dem Stand der Technik die Abgasleitungen unter Ausbildung mindestens eines integrierten Abgaskrümmers innerhalb des Zylinderkopfes zusammengeführt.

Die Länge der Abgasleitungen wird durch eine Integration in den Zylinderkopf verringert. Zum einen wird dadurch das Leitungsvolumen d.h. das Abgasvolumen der Abgasleitungen stromaufwärts der Turbine verkleinert, so dass das Ansprechverhalten der Turbine verbessert wird. Zum anderen führen die verkürzten Abgasleitungen auch zu einer geringeren thermischen Trägheit des Abgassystems stromaufwärts der Turbine, so dass sich die Temperatur der Abgase am Turbineneintritt erhöht, weshalb auch die Enthalpie der Abgase am Eintritt der Turbine höher ist und gegebenenfalls stromabwärts der Turbine vorgesehene Abgasnachbehandlungssysteme schneller eine erforderliche Betriebstemperatur erreichen.

Die Zusammenführung der Abgasleitungen innerhalb des Zylinders gestattet darüber hinaus ein dichtes Packaging der Antriebseinheit.

Ein derartiger Zylinderkopf mit mindestens zwei Zylindern, bei dem sich an jede Auslaßöffnung eine Abgasleitung anschließt und die Abgasleitungen von mindestens zwei Zylindern innerhalb des Zylinderkopfes zu einer Gesamtabgasleitung zusammenführen, ist auch Gegenstand der vorliegenden Erfindung.

Ein derartig ausgebildeter Zylinderkopf ist aber thermisch höher belastet als ein herkömmlicher Zylinderkopf, der mit einem externen Krümmer ausgestattet ist, und stellt daher erhöhte Anforderungen an die Kühlung.

Die bei der Verbrennung durch die exotherme, chemische Umwandlung des Kraftstoffes freigesetzte Wärme wird teilweise über die den Brennraum begrenzenden Wandungen an den Zylinderkopf und den Zylinderblock und teilweise über den Abgasstrom an die angrenzenden Bauteile und die Umgebung abgeführt. Um die thermische Belastung des Zylinderkopfes in Grenzen zu halten, muß ein Teil des in den Zylinderkopf eingeleiteten Wärmestromes dem Zylinderkopf wieder entzogen werden.

Aufgrund der wesentlich höheren Wärmekapazität von Flüssigkeiten gegenüber Luft können mit einer Flüssigkeitskühlung wesentlich größere Wärmemengen abgeführt werden als mit einer Luftkühlung, weshalb Zylinderköpfe der vorliegenden Art mit einer Flüssigkeitskühlung ausgestattet werden.

Die Flüssigkeitskühlung erfordert die Ausstattung des Zylinderkopfes mit einem Kühlmittelmantel d. h. die Anordnung von das Kühlmittel durch den Zylinderkopf führenden Kühlmittelkanälen, was eine komplexe Struktur der Zylinderkopfkonstruktion bedingt. Dabei wird der mechanisch und thermisch hochbelastete Zylinderkopf durch das Einbringen der Kühlmittelkanäle einerseits in seiner Festigkeit geschwächt. Andererseits muß die Wärme nicht wie bei der Luftkühlung erst an die Zylinderkopfoberfläche geleitet werden, um abgeführt zu werden. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Bei entsprechender Auslegung der Flüssigkeitskühlung bzw. entsprechender Kühlleistung kann der Zylinderkopf unter Umständen vollständig oder zumindest in Teilen aus Aluminium gefertigt werden, was gegenüber der Verwendung von hochtemperaturfestem austenitischem Stahl Kostenvorteile mit sich bringt. Der Einsatz von Aluminium zur Herstellung des Zylinderkopfes führt darüber hinaus zu einem geringeren Gewicht des Zylinderkopfes und damit der gesamten Antriebseinheit.

Vorzugsweise sollte die Kühlleistung derart hoch sein, dass auf eine Anfettung (λ < 1) zur Absenkung der Abgastemperaturen, wie sie beispielsweise in der EP 1 722 090 A2 beschrieben ist und die unter energetischen Aspekten - insbesondere hinsichtlich des Kraftstoffverbrauchs der Brennkraftmaschine - und hinsichtlich der Schadstoffemissionen als nachteilig anzusehen ist, verzichtet werden kann. Denn im Rahmen einer Anfettung wird mehr Kraftstoff eingespritzt als mit der bereitgestellten Luftmenge überhaupt verbrannt werden kann, wobei der zusätzliche Kraftstoff ebenfalls erwärmt und verdampft wird, so dass die Temperatur der Verbrennungsgase sinkt. Insbesondere gestattet es die notwendige Anfettung nicht immer, die Brennkraftmaschine in der Weise zu betrieben, wie es beispielsweise für ein vorgesehenes Abgasnachbehandlungssystem erforderlich wäre. D. h. es ergeben sich Einschränkungen beim Betrieb der Brennkraftmaschine.

Die Zusammenführung der Abgasleitungen innerhalb des Zylinderkopfes d. h. die Integration des mindestens einen Abgaskrümmers führt zusammen mit der Ausstattung des Kopfes mit einer Flüssigkeitskühlung in vorteilhafter Weise beim Kaltstart der Brennkraftmaschine zu einer schnellen Erwärmung des Kühlmittels, damit zu einer schnelleren Aufwärmung der Brennkraftmaschine und, sofern eine kühlmittelbetriebene Heizung des Fahrgastraumes eines Fahrzeugs vorgesehen ist, zu einer schnelleren Aufheizung dieses Fahrgastraumes.

Berücksichtigt man weiter, dass sich eine Entwicklung hin zu kleinen, hochaufgeladenen Motoren vollzogen hat und weiter vollzieht, wird ersichtlich, dass in der Praxis eine effiziente Flüssigkeitskühlung von immer größerer Relevanz ist, denn die thermische Belastung ist bei aufgeladenen Motoren im Vergleich zu herkömmlichen Brennkraftmaschinen erheblich größer.

Häufig wird für die Aufladung einer Brennkraftmaschine - wie bei der Kombination, die Gegenstand der vorliegenden Erfindung ist, auch möglich - ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Insbesondere die motornahe Anordnung der Turbine am bzw. die Verbindung der Turbine mit dem Zylinderkopf gestaltet sich - auch aufgrund der beengten Platzverhältnisse - schwierig. Nach dem Stand der Technik wird die Turbine im Eintrittsbereich mit einem Flansch ausgestattet und mit Schraubenverbindungen am Zylinderkopf befestigt. Hierzu werden Butzen zum Durchführen der Schrauben rings um den Eintrittsbereich der Turbine herum angeordnet.

Bei der konstruktiven Auslegung des Turbinengehäuses muß darauf geachtet werden, dass für die Montage von Turbine und Zylinderkopf um die Butzen herum ausreichend Platz für die Montagewerkzeuge vorgesehen wird, damit diese mit den Schrauben in Eingriff gebracht werden können. Diese konstruktive Anforderung an das Turbinengehäuse führt dazu, dass das Gehäuse vergleichsweise groß d. h. voluminös dimensioniert und das Laufrad der Turbine weit beabstandet zum Eintrittsbereich angeordnet wird, was eine Vielzahl von Nachteilen mit sich bringt, insbesondere ein erhöhtes Gewicht, ein größerer Bauraumbedarf und ein verschlechtertes Ansprechverhalten der Turbine.

Die Herstellungskosten für die Turbine sind vergleichsweise hoch, da der für das thermisch hochbelastete Turbinengehäuse verwendete - häufig nickelhaltige - Werkstoff kostenintensiv ist, insbesondere im Vergleich zu dem für den Zylinderkopf vorzugsweise verwendeten Werkstoff; beispielweise Aluminium. Nicht nur die Werkstoffkosten an sich sind vergleichsweise hoch, sondern auch die Kosten für die Bearbeitung dieses für das Turbinengehäuse verwendeten Werkstoffes.

Vor dem Hintergrund des oben Gesagten ist es die Aufgabe der vorliegenden Erfindung, eine Kombination gemäß dem Oberbegriff des Anspruchs 1 d. h. der gattungsbildenden Art bereitzustellen, die insbesondere hinsichtlich der Herstellungskosten optimiert ist.

Gelöst wird diese Aufgabe durch eine Kombination mit Zylinderkopf und Turbine, bei der der Zylinderkopf
- an einer Montage-Stirnseite mit einem Zylinderblock verbindbar ist,
- mit einem zumindest teilweise im Zylinderkopf integrierten Kühlmittelmantel ausgestattet ist,
- mindestens zwei Zylinder aufweist, wobei jeder Zylinder mindestens eine Auslaßöffnung zum Abführen der Abgase aus dem Zylinder aufweist und sich an jede Auslaßöffnung eine Abgasleitung anschließt, und bei dem
- die Abgasleitungen von mindestens zwei Zylindern unter Ausbildung eines integrierten Abgaskrümmers innerhalb des Zylinderkopfes zu einer Gesamtabgasleitung zusammenführen, und die dadurch gekennzeichnet ist, dass
- die ein Turbinengehäuse aufweisende Turbine zur Ausbildung einer Flüssigkeitskühlung mit einem Kühlmittelmantel ausgestattet ist, wobei der im Zylinderkopf integrierte Kühlmittelmantel mit dem Kühlmittelmantel der Turbine verbunden ist.

Erfindungsgemäß wird nicht nur der Zylinderkopf, sondern auch die Turbine mit einem Kühlmittelmantel ausgestattet. Während die Turbine nach dem Stand der Technik mittels Luftkühlung gekühlt wird, bei der der Wärmeabtransport mittels einer über die Oberfläche des Turbinengehäuses geführten Luftströmung erfolgt, und/oder infolge Wärmestrahlung kühlt, verfügt die Turbine der vorliegenden Kombination über eine Flüssigkeitskühlung.

Aufgrund der wesentlich höheren Kühlleistung einer Flüssigkeitskühlung gegenüber einer Luftkühlung kann auf die Verwendung thermisch hochbelastbarer Werkstoffe zur Herstellung der Turbine bzw. des Turbinengehäuses vollständig oder zumindest teilweise verzichtet werden. Der Einsatz kostenintensiver - häufig nickelhaltiger - Werkstoffe ist erfindungsgemäß nicht mehr erforderlich bzw. stark reduziert.

Vorteilhaft sind Ausführungsformen, bei denen das Turbinengehäuse zumindest teilweise aus Aluminium gefertigt ist. Dies bringt gegenüber der Verwendung üblicher Werkstoffe Kostenvorteile mit sich. Darüber hinaus führt der Einsatz von Aluminium zur Herstellung des Turbinengehäuses zu einem geringeren Gewicht.

Die erfindungsgemäße Kombination eignet sich insbesondere für aufgeladene Brennkraftmaschinen, die aufgrund höherer Abgastemperaturen eine effiziente und optimierte Kühlung erfordern.

Vorteilhaft sind daher auch Ausführungsformen, bei denen die Turbine Bestandteil eines Abgasturboladers ist und das Turbinengehäuse Bestandteil des Turboladergehäuses.

Erfindungsgemäß ist der im Zylinderkopf integrierte Kühlmittelmantel mit dem Kühlmittelmantel der Turbine verbunden, so dass die übrigen zur Ausbildung eines Kühlkreislaufes erforderlichen Bauteile und Aggregate grundsätzlich nur in einfacher Ausfertigung vorgesehen werden müssen und sowohl für den Kühlkreislauf der Turbine als auch für den des Zylinderkopfes verwendet werden können, was zu Synergien und erheblichen Kosteneinsparungen führt, aber auch eine Gewichtsersparnis mit sich bringt. So werden vorzugsweise nur eine Pumpe zur Förderung des Kühlmittels und ein Behältnis zur Bevorratung des Kühlmittels vorgesehen. Die im Zylinderkopf und im Turbinengehäuse an das Kühlmittel abgegebene Wärme kann dem Kühlmittel in einem gemeinsamen Wärmetauscher entzogen werden.

Darüber hinaus kann der Kühlmittelmantel der Turbine via Zylinderkopf mit Kühlmittel versorgt werden, so dass keine weiteren Kühlmittelzuführ- und Abführöffnungen am Turbinengehäuse vorgesehen werden müssen und auch auf weitere Kühlmittelleitungen verzichtet werden kann.

Damit wird die der Erfindung zugrunde liegende Aufgabe gelöst, nämlich eine Kombination mit Zylinderkopf und Turbine gemäß dem Oberbegriff des Anspruchs 1 bereitzustellen, die insbesondere hinsichtlich der Herstellungskosten optimiert ist.

Weist der Zylinderkopf einer Kombination drei oder mehr Zylinder auf und führen nur die Abgasleitungen von zwei Zylindern innerhalb des Zylinderkopfes zu einer Gesamtabgasleitung zusammen, handelt es sich ebenfalls um eine erfindungsgemäße Kombination.

Ausführungsformen der Kombination, bei denen der Zylinderkopf beispielsweise vier in Reihe angeordnete Zylinder aufweist und die Abgasleitungen der außenliegenden Zylinder und die Abgasleitungen der innenliegenden Zylinder innerhalb des Zylinderkopfes jeweils zu einer Gesamtabgasleitung zusammenführen, sind ebenfalls erfindungsgemäße Kombinationen.

Bei drei und mehr Zylindern sind daher auch Ausführungsformen der Kombination vorteilhaft, bei denen
- mindestens drei Zylinder in der Art konfiguriert sind, dass sie zwei Gruppen mit jeweils mindestens einem Zylinder bilden, und
- die Abgasleitungen der Zylinder jeder Zylindergruppe unter Ausbildung eines integrierten Abgaskrümmers innerhalb des Zylinderkopfes jeweils zu einer Gesamtabgasleitung zusammenführen.

Diese Ausführungsform der Kombination eignet sich insbesondere für den Einsatz einer zweiflutigen Turbine. Eine zweiflutige Turbine weist einen Eintrittsbereich mit zwei Eintrittskanälen auf, wobei die beiden Gesamtabgasleitungen mit der zweiflutigen Turbine in der Art verbunden werden, dass jeweils eine Gesamtabgasleitung in einen Eintrittskanal mündet. Die Zusammenführung der beiden in den Gesamtabgasleitungen geführten Abgasströmungen erfolgt gegebenenfalls stromabwärts der Turbine, aber vorliegend nicht stromaufwärts der Turbine. Werden die Abgasleitungen in der Weise gruppiert, dass die hohen Drücke, insbesondere die Vorlastausstöße, erhalten werden können, eignet sich eine zweiflutige Turbine insbesondere für eine Stoßaufladung, womit auch hohe Turbinendruckverhältnisse bei niedrigen Drehzahlen erzielt werden können.

Die Gruppierung der Zylinder bzw. Abgasleitungen bietet aber auch Vorteile beim Einsatz mehrerer Turbinen bzw. Abgasturbolader, wobei jeweils eine Gesamtabgasleitung mit einer Turbine verbunden wird.

Grundsätzlich gestattet es die Zusammenführung der Abgasleitungen zu zwei oder mehr Gesamtabgasleitungen, die Zylinder in geeigneter Weise zu konfigurieren d. h. zu gruppieren bzw. voneinander zu trennen - beispielsweise in der Art, dass sich die dynamischen Wellenvorgänge in den Abgasleitungen einer Zylindergruppe möglichst wenig nachteilig beeinflussen. Vorzugsweise sollen sich die in den Abgasleitungen ausbreitenden Druckwellen nicht gegenseitig abschwächen und die Zylinder einer Zylindergruppe einen möglichst großen Versatz hinsichtlich ihrer Arbeitsprozesse aufweisen, damit sich die in einer Zylindergruppe zusammengefaßten Zylinder nicht gegenseitig beim Ladungswechsel nachteilig beeinflussen d. h. behindern.

Da sich die Leitungslängen der einzelnen Abgasleitungen durch eine Integration in den Zylinderkopf verkürzen, steigt grundsätzlich auch die Gefahr, dass sich die Zylinder gegenseitig beim Ladungswechsel behindern bzw. sich die dynamischen Wellenvorgänge in den Abgasleitungen der Zylinder nachteilig beeinflussen, was eigentlich vermieden werden sollte. Insofern ist die Gruppierung der Zylinder insbesondere im Zusammenhang mit der erfindungsgemäßen Integration der Abgasleitungen in den Zylinderkopf vorteilhaft, da auf diese Weise die Abgasströmungen zumindest bis hin zu den Gesamtabgasleitungen voneinander separiert werden können.

Hinsichtlich der in Rede stehenden Kombination sind Ausführungsformen vorteilhaft, bei denen der Kühlmittelmantel des Zylinderkopfes sich auch zwischen den beiden Gesamtabgasleitungen erstreckt, um eine ausreichende Kühlung zu gewährleisten.

In dem Bereich, in dem Abgasleitungen - gegebenenfalls als Teilabgasleitungen - zu einer Gesamtabgasleitung zusammenführen und heißes Abgas - gegebenenfalls mehrerer Zylindergesammelt wird, ist der Zylinderkopf thermisch besonders hoch belastet. Dies hat gleiche mehrere Gründe.

Zum einen wird eine Sammelstelle bzw. Gesamtabgasleitung von größeren Abgasmengen passiert, wohingegen eine einzelne Abgasleitung, die sich an die Auslaßöffnung eines Zylinders anschließt, lediglich mit dem Abgas bzw. einem Teil des Abgases eines Zylinders beaufschlagt wird. D. h. die absolute Menge an Abgas, die Wärme an den Zylinderkopf abgibt bzw. abgeben kann und zur Erwärmung des Zylinderkopfes beiträgt, ist hier am größten.

Zum anderen sind Sammelstellen und Gesamtabgasleitungen nahezu kontinuierlich mit heißen Abgasen beaufschlagt, wohingegen eine Abgasleitung eines Zylinders nur während des Ladungswechsels des jeweiligen Zylinders d. h. bei einer Vier-Takt-Brennkraftmaschine einmal innerhalb von zwei Kurbelwellenumdrehungen von heißem Abgas durchströmt wird.

Darüber hinaus ist zu berücksichtigen, daß im Zustrombereich einer Gesamtabgasleitung d. h. im Bereich einer Sammelstelle die Abgasströmungen der einzelnen Abgasleitungen mehr oder weniger stark umgelenkt werden müssen, um die Abgasleitungen zu einer Gesamtabgasleitung zusammenführen zu können. Die einzelnen Abgasströmungen haben daher in diesem Bereich - zumindest teilweise - eine Geschwindigkeitskomponente, die senkrecht auf den Wandungen der Abgasleitung steht, wodurch der Wärmeübergang durch Konvektion und folglich die thermische Belastung des Zylinderkopfes zusätzlich erhöht wird.

Aus den genannten Gründen ist es daher vorteilhaft, den Zylinderkopf in unmittelbarer Nähe zu den Gesamtabgasleitungen zu kühlen bzw. mit einer Flüssigkeitskühlung auszustatten, also den Kühlmittelmantel zumindest teilweise zwischen den beiden Gesamtabgasleitungen anzuordnen.

Vorteilhaft sind aber auch Ausführungsformen, bei denen die Abgasleitungen sämtlicher Zylinder des Zylinderkopfes innerhalb des Zylinderkopfes zu einer einzigen d. h. gemeinsamen Gesamtabgasleitung zusammenführen.

Weitere vorteilhafte Ausführungsformen der Kombination werden in Zusammenhang mit den Unteransprüchen erörtert.

Vorteilhaft sind Ausführungsformen der Kombination, bei denen der im Zylinderkopf integrierte Kühlmittelmantel einen unteren Kühlmittelmantel, der zwischen den Abgasleitungen und der Montage-Stirnseite des Zylinderkopfes angeordnet ist, und einen oberen Kühlmittelmantel, der auf der dem unteren Kühlmittelmantel gegenüberliegenden Seite der Abgasleitungen angeordnet ist, aufweist.

Vorteilhaft sind dabei Ausführungsformen der Kombination, bei denen der untere Kühlmittelmantel und/oder der obere Kühlmittelmantel mit dem Kühlmittelmantel der Turbine verbunden sind.

Vorteilhaft sind Ausführungsformen der Kombination, bei denen beabstandet zu den Abgasleitungen auf der den mindestens zwei Zylindern abgewandten Seite des integrierten Abgaskrümmers mindestens eine Verbindung zwischen dem unteren Kühlmittelmantel und dem oberen Kühlmittelmantel vorgesehen ist, die dem Durchtritt von Kühlmittel dient.

Der Zylinderkopf verfügt vorliegend über mindestens eine Verbindung, die in einer Außenwandung des Zylinderkopfes angeordnet ist d. h. außerhalb des mindestens einen integrierten Abgaskrümmers liegt.

Bei der Verbindung handelt es sich um einen Durchbruch bzw. Durchflußkanal, der den unteren Kühlmittelmantel mit dem oberen Kühlmittelmantel verbindet und durch den Kühlmittel aus dem unteren Kühlmittelmantel in den oberen Kühlmittelmantel strömen kann und/oder umgekehrt.

Zum einen findet hierdurch grundsätzlich eine Kühlung auch im Bereich der Außenwandung des Zylinderkopfes statt, auf die nach dem Stand der Technik - wie in der EP 1 722 090 A2 beschrieben - zur Realisierung einer kompakten Bauweise verzichtet wird. Zum anderen wird die herkömmliche Längsströmung des Kühlmittels d. h. der Kühlmittelstrom in Richtung der Längsachse des Zylinderkopfes ergänzt durch eine Kühlmittelquerströmung, die quer zur Längsströmung und vorzugsweise in etwa in Richtung der Zylinderlängsachsen verläuft. Dabei trägt die durch die mindestens eine Verbindung hindurchgeführte Kühlmittelströmung maßgeblich zur Wärmeabfuhr bei. Insbesondere kann durch eine entsprechende Dimensionierung des Querschnitts der mindestens einen Verbindung gezielt Einfluß genommen werden auf die Strömungsgeschwindigkeit des Kühlmittels in der Verbindung und damit auf die Wärmeabfuhr im Bereich dieser mindestens einen Verbindung.

Vorteilhaft sind daher auch insbesondere Ausführungsformen, bei denen der untere und der obere Kühlmittelmantel nicht über den gesamten Bereich der Außenwandung miteinander verbunden sind, sondern sich die mindestens eine Verbindung nur über einen Teilbereich der Außenwandung erstreckt. Dadurch kann die Strömungsgeschwindigkeit in der mindestens einen Verbindung gesteigert werden, was den Wärmeübergang durch Konvektion erhöht. Vorteile bietet dies auch hinsichtlich der mechanischen Festigkeit des Zylinderkopfes.

Die Kühlung kann zusätzlich und vorteilhafterweise dadurch verbessert werden, dass zwischen dem oberen und unteren Kühlmittelmantel ein Druckgefälle generiert wird, wodurch wiederum die Geschwindigkeit in der mindestens einen Verbindung erhöht wird, was zu einem erhöhten Wärmeübergang infolge Konvektion führt.

Ein solches Druckgefälle bietet auch Vorteile, falls der untere Kühlmittelmantel und der obere Kühlmittelmantel mit dem Kühlmittelmantel der Turbine bzw. über den Kühlmittelmantel der Turbine miteinander verbunden sind. Das Druckgefälle dient dann als treibende Kraft zur Förderung des Kühlmittels durch den Kühlmittelmantel der Turbine.

Vorteilhaft sind Ausführungsformen, bei denen die mindestens eine Verbindung vollständig in der Außenwandung des Zylinderkopfes integriert ist. Diese Ausführungsform grenzt sich beispielsweise gegenüber Bauformen des Zylinderkopfes ab, bei denen in der Außenwandung eine Öffnung vorgesehen ist, die dem Zuführen bzw. Abführen von Kühlmittel in den bzw. aus dem oberen und dem unteren Kühlmittelmantel dient.

Dabei kann die mindestens eine Verbindung im Rahmen der Fertigung des Kopfes durchaus zwischenzeitlich via Zugangsöffnung nach außen hin offen sein, beispielsweise zur Entfernung eines Sandkerns oder Fixieren des Sandkerns während des Gießvorganges. Der endgefertigte Zylinderkopf weist dann aber entsprechend der in Rede stehenden Ausführung mindestens eine vollständig in der Außenwandung integrierte Verbindung auf, wozu ein eventuell vorgesehener Zugang zur Verbindung zu verschließen ist.

Grundsätzlich sind auch Kombinationen ausführbar, bei denen im Bereich der mindestens einen Verbindung eine Kühlmittelzufuhr und/oder Kühlmittelabfuhr erfolgt, wozu mindestens ein Kanal von der mindestens einen Verbindung abzweigt. Die Kühlmittelabfuhr bzw. Kühlmittelzufuhr dient der Versorgung der Flüssigkeitskühlung mit Kühlmittel d.h. der Ausbildung eines Kühlkreislaufes. Die Verbindung kann auch mit dem Kühlmittelmantel der Turbine verbunden sein, insbesondere in der Art, dass eine Versorgung der Flüssigkeitskühlung der Turbine über die mindestens eine Verbindung erfolgt.

Vorteilhaft sind Ausführungsformen, bei denen der Abstand zwischen der mindestens einen Verbindung und der Gesamtabgasleitung kleiner ist als der Durchmesser, vorzugsweise kleiner ist als der halbe Durchmesser, eines Zylinders, wobei sich der Abstand aus der Wegstrecke zwischen der Außenwand der Gesamtabgasleitung und der Außenwand der Verbindung ergibt. Dann trägt die mindestens eine Verbindung in vorteilhafter Weise zur Kühlung der Sammelstelle bzw. des Bereichs um die Gesamtabgasleitung bei. Hinsichtlich der hohen thermischen Belastung dieses Bereichs wird Bezug genommen auf die weiter oben gemachten Ausführungen.

Vorteilhaft sind Ausführungsformen, bei denen mindestens zwei Verbindungen vorgesehen sind, die auf gegenüberliegenden Seiten der Gesamtabgasleitung angeordnet sind. Eine symmetrische Anordnung der mindestens zwei Verbindungen im Bereich der Außenwandung trägt dem Umstand Rechnung, dass das im Zylinderkopf integrierte System von Abgasleitungen in der Regel auch symmetrisch ausgebildet ist. Die zueinander korrespondierende Ausbildung von Abgassystem und Kühlung sorgt somit auch für eine symmetrische Temperaturverteilung im Zylinderkopf.

Vorteilhaft sind Ausführungsformen, bei denen die Turbine und der Zylinderkopf separate Bauteile darstellen, welche zur Ausbildung der Kombination kraftschlüssig, formschlüssig und/oder stoffschlüssig miteinander verbunden sind.

Eine modular aufgebaute Kombination, die erst durch Verbinden der Turbine mit dem Zylinderkopf ausgebildet wird, hat den Vorteil, dass die einzelnen Bauteile - nämlich die Turbine bzw. der Zylinderkopf - nach dem Baukastenprinzip auch mit anderen Bauteilen, insbesondere anderen Zylinderköpfen bzw. Turbinen, kombiniert werden können. Die vielfältige Einsetzbarkeit eines Bauteils erhöht in der Regel die Stückzahl, wodurch die Herstellungskosten pro Stück gesenkt werden können. Zudem werden hierdurch die Kosten gesenkt, falls die Turbine bzw. der Zylinderkopf infolge eines Defekts auszutauschen d. h. zu ersetzen ist.

Vorteilhaft sind auch Ausführungsformen, bei denen das Turbinengehäuse zumindest teilweise im Zylinderkopf integriert ist, so dass der Zylinderkopf und zumindest ein Teil des Turbinengehäuses ein monolithisches Bauteil bilden.

Vorteilhafterweise ist dabei das monolithische Bauteil einteilig als gegossenes Bauteil ausgebildet, vorzugsweise aus Aluminium, wodurch eine besonders hohe Gewichtsersparnis erzielt wird im Vergleich zur Verwendung von Stahl. Die Kosten für die Bearbeitung des Aluminiumgehäuses sind ebenfalls geringer.

Nichtsdestotrotz kann das monolithische Bauteil auch aus Grauguß oder anderen Gußmaterialien hergestellt werden. Denn unabhängig vom verwendeten Material bleiben die Vorteile eines monolithisch ausgebildeten Bauteils gemäß der in Rede stehenden Ausführungsform erhalten, insbesondere die kompakte Bauweise der Kombination, die grundsätzliche Gewichtsersparnis durch den Wegfall der nicht notwendigen Verbindungselemente, das verbesserte Ansprechverhalten der Turbine infolge der überaus motornahen Anordnung und dergleichen.

Eine motornahe Anordnung der Turbine und die kompakte Bauweise können insbesondere realisiert werden, weil ein Zugriff für Montagewerkzeuge bei der konstruktiven Auslegung des Turbinengehäuses nicht mehr berücksichtigt werden muß. Das Gehäuse ist vergleichsweise kleinvolumig und das Laufrad der Turbine kann in der Nähe zum Eintrittsbereich angeordnet werden.

Die zumindest teilweise Integration des Turbinengehäuses in den Zylinderkopf erleichtert insbesondere das erfindungsgemäße Verbinden des im Zylinderkopf integrierten Kühlmittelmantels mit dem Kühlmittelmantel der Turbine. Dabei kann auch ein Teil des in den Zylinderkopf integrierten Kühlmittelmantels gleichzeitig den Kühlmittelmantel der Turbine mit ausbilden, so dass eine Verbindung von zwei originär unabhängigen Kühlmänteln im eigentlichen Sinne nicht mehr vorliegt bzw. auszubilden ist, erfindungsgemäß hingegen schon.

Die Ausbildung einer gasdichten, thermisch hochbelastbaren und daher kostenintensiven Verbindung zwischen Zylinderkopf und Turbine entfällt prinzipbedingt durch die einteilige Ausbildung. Infolgedessen besteht auch nicht mehr die Gefahr, dass Abgas ungewollt infolge einer Leckage in die Umgebung austritt. In Bezug auf die Kühlmittelkreisläufe bzw. die Verbindung der Kühlmittelmäntel und der Leckage von Kühlmittel gilt Ähnliches in analoger Weise.

Ist die Turbine Bestandteil eines Abgasturboladers sind in diesem Zusammenhang Ausführungsformen vorteilhaft, bei denen die Welle des Abgasturboladers mitsamt dem vormontierten Turbinen- und Verdichterlaufrad als eigenständige vorgefertigte Baugruppe, beispielsweise in Form einer Kassette, in das im Zylinderkopf integrierte Turbinengehäuse bzw. Turboladergehäuse im Rahmen der Montage eingeschoben wird. Dies verkürzt die Montagezeit erheblich.

Dabei nimmt das Gehäuse nicht nur Turbinenkomponenten, sondern auch Teile des Verdichters auf, was grundsätzlich d. h. bei sämtlichen erfindungsgemäßen Kombinationen der Fall sein kann, soweit ein Abgasturbolader eingesetzt wird d. h. die Turbine Teil eines Abgasturboladers ist. Insoweit dient das Gehäuse auch als Verdichtergehäuse.

Durch die Integration des Turbinengehäuses wird der im Motorraum eines Fahrzeugs benötigte Bauraum für die Kombination weiter reduziert. Die Integration weiterer Komponenten ist vorteilhaft. Es ist möglich, Frischluftleitungen zum und vom Kompressor d. h. Verdichter anzubinden, beispielsweise die Leitung vom Verdichteraustritt zur Einlaßseite des Zylinderkopfes hin. Des Weiteren besteht die Möglichkeit, eine Frischluftleitung in einen Zylinderkopfdeckel zu integrieren und die Wegstrecke bis zum Verdichtergehäuse mittels eines Kanals zu überbrücken, wobei beispielsweise dieser Kanal auch Teil des Zylinderkopfes sein kann.

Die erfindungsgemäße Integration und Kühlung der thermisch hoch belasteten Bauteile kann die herkömmlichen Hitzebleche, die nach dem Stand der Technik Abgaskrümmer und/oder Turbinengehäuse zum Schutz benachbarter Bauteile vor hohen Temperaturen abschirmen, entbehrlich machen.

Vorteilhaft sind Ausführungsformen der Kombination, bei denen jeder Zylinder mindestens zwei Auslaßöffnungen zum Abführen der Abgase aus dem Zylinder aufweist. Wie bereits eingangs erwähnt, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung vorteilhaft ist.

Vorteilhaft sind dabei Ausführungsformen, bei denen zwischen den Abgasleitungen mindestens eines Zylinders - beabstandet zu diesen Abgasleitungen - mindestens eine Verbindung zwischen dem unteren Kühlmittelmantel und dem oberen Kühlmittelmantel vorgesehen ist. Auf diese Weise kann eine Kühlung in unmittelbarer Nachbarschaft zu den Auslaßöffnungen realisiert werden, was vorteilhaft ist, wenn berücksichtigt wird, daß die Abgase bei Verlassen des Zylinders die höchste Temperatur aufweisen.

Vorteilhaft sind Ausführungsformen der Kombination, bei denen zunächst die Abgasleitungen der mindestens zwei Auslaßöffnungen jedes Zylinders zu einer dem Zylinder zugehörigen Teilabgasleitung zusammenführen bevor die Teilabgasleitungen von mindestens zwei Zylindern zu der Gesamtabgasleitung zusammenführen.

Die Gesamtwegstrecke aller Abgasleitungen wird hierdurch verkürzt. Das stufenweise Zusammenführen der Abgasleitungen zu einer Gesamtabgasleitung trägt zudem zu einer kompakteren d. h. weniger voluminösen Bauweise des Zylinderkopfes und damit insbesondere zu einer Gewichtsreduzierung und einem effektiveren Packaging im Motorraum bei.

Vorteilhaft sind dabei Ausführungsformen, bei denen zwischen den Teilabgasleitungen von mindestens zwei benachbarten Zylindern - beabstandet zu diesen Teilabgasleitungen - mindestens eine Verbindung zwischen dem unteren Kühlmittelmantel und dem oberen Kühlmittelmantel vorgesehen ist.

Bei der - in der Regel gabelförmigen - Zusammenführung der Teilabgasleitungen verjüngt sich die Wandstärke der die Teilabgasleitungen voneinander trennenden Wandung, so dass diese Wandung insbesondere in dem Bereich, in dem die Zusammenführung tatsächlich stattfindet, thermisch hoch belastet ist. Das Vorsehen einer Verbindung d. h. eines Kühlkanals zum Zwecke der Wärmeabfuhr ist daher vorteilhaft. Dieselben Überlegungen und Zusammenhänge gelten auch für die bereits weiter oben beschriebene Ausführungsform des Zylinderkopfes, bei denen zwischen den Abgasleitungen mindestens eines Zylinders mindestens eine Verbindung zwischen dem unteren Kühlmittelmantel und dem oberen Kühlmittelmantel vorgesehen ist.

Vorteilhaft können aber auch Ausführungsformen des Zylinderkopfes sein, bei denen jeder Zylinder eine Auslaßöffnung zum Abführen der Abgase aus dem Zylinder aufweist.

Vorteilhaft sind dabei Ausführungsformen des Zylinderkopfes, bei denen zwischen den Abgasleitungen von mindestens zwei benachbarten Zylindern - beabstandet zu diesen Abgasleitungen - mindestens eine Verbindung zwischen dem unteren Kühlmittelmantel und dem oberen Kühlmittelmantel vorgesehen ist.

Grundsätzlich können Ausführungsformen der Kombination vorteilhaft sein, bei denen beabstandet zu den Abgasleitungen auf der den mindestens zwei Zylindern zugewandten Seite des integrierten Abgaskrümmers mindestens eine Verbindung zwischen dem unteren Kühlmittelmantel und dem oberen Kühlmittelmantel vorgesehen ist, die dem Durchtritt von Kühlmittel dient, um die Temperaturen im Zylinderkopf zu senken.

Vorteilhaft sind Ausführungsformen der Kombination, bei denen eine Abgriffstelle zur Entnahme von Abgas im Zylinderkopf an dem integrierten Abgaskrümmer vorgesehen ist, an der zumindest ein Teil des aus den Zylindern abgeführten Abgases dem Abgaskrümmer innerhalb des Zylinderkopfes entnehmbar ist, wobei sich stromabwärts der Abgriffstelle eine Bypaßleitung anschließt, mit der das entnommene Abgas an der Turbine vorbeiführbar ist.

Die Bypaßleitung zur Umgehung der Turbine zweigt innerhalb des Zylinderkopfes von dem im Zylinderkopf integrierten Abgaskrümmer ab, was konstruktiv dadurch realisiert wird, daß eine Abgriffstelle zur Entnahme von Abgas im Zylinderkopf an dem integrierten Abgaskrümmer vorgesehen wird, an die sich die Bypaßleitung anschließt.

Vorliegend wird auf die Anordnung der Bypaßleitung und gegebenenfalls eines Steuerorgans in der Turbine bzw. im Turbinengehäuse verzichtet. Dadurch nehmen das Volumen und das Gewicht der eingesetzten Turbine ab und die Fertigungskosten sinken, insbesondere auch infolge der wesentlich weniger aufwendigen Bearbeitung des Gehäuses. Günstig ist dies auch im Hinblick auf eine kompakte Bauweise der Kombination und der gesamten Antriebseinheit.

Es kann auch eine Möglichkeit bzw. Leitung zur Abgasrückführung vorgesehen werden.

Vorteilhaft sind dabei Ausführungsformen der Kombination, bei denen eine Leitung zur Rückführung von Abgas im Zylinderkopf vorgesehen ist, die von dem im Zylinderkopf integrierten Abgaskrümmer abzweigt und mit der zumindest ein Teil des aus den Zylindern abgeführten Abgases dem Abgaskrümmer innerhalb des Zylinderkopfes entnehmbar ist.

Die eingesetzte Turbine kann mit einer variablen Turbinengeometrie ausgestattet werden, die eine weitergehende Anpassung an den jeweiligen Betriebspunkt der Brennkraftmaschine durch Verstellen der Turbinengeometrie bzw. des wirksamen Turbinenquerschnittes gestattet. Dabei sind im Eintrittsbereich der Turbine Leitschaufeln zur Beeinflussung der Strömungsrichtung angeordnet sind. Im Gegensatz zu den Laufschaufeln des umlaufenden Laufrades rotieren die Leitschaufeln nicht mit der Welle der Turbine.

Verfügt die Turbine über eine feste unveränderliche Geometrie, sind die Leitschaufeln nicht nur stationär, sondern zudem völlig unbeweglich im Eintrittsbereich angeordnet d. h. starr fixiert. Wird hingegen eine Turbine mit variabler Geometrie eingesetzt, sind die Leitschaufeln zwar stationär angeordnet, aber nicht völlig unbeweglich, sondern um ihre Achse drehbar, so daß auf die Anströmung der Laufschaufeln Einfluß genommen werden kann.

Vorteilhaft sind Ausführungsformen der Kombination, bei denen die Turbine eine Axialturbine ist. Bei einer Axialturbine erfolgt die Anströmung der Laufradschaufeln im Wesentlichen axial d. h. in der Art, dass die Geschwindigkeitskomponente in axialer Richtung größer ist als die radiale Geschwindigkeitskomponente. Der Geschwindigkeitsvektor der Anströmung im Bereich des Laufrades verläuft dabei vorzugsweise parallel zur Welle bzw. Achse des Abgasturboladers, falls die Anströmung exakt axial verläuft.

Die Verwendung einer Axialturbine macht die bei Radialturbinen zwingend erforderliche d. h. prinzipbedingt unumgängliche radiale Zuführung des Abgases mittels Spiral- oder Schneckengehäuse entbehrlich, wodurch der Druckverlust im Abgas infolge Umlenkung gemindert und die Abgasenthalpie am Eintritt in die Turbine erhöht werden kann.

Vorteilhaft sind dabei Ausführungsformen, bei denen der Eintrittsbereich der Axialturbine koaxial zur Welle der Axialturbine verläuft und ausgebildet ist, so dass die Zuströmung des Abgases zur Turbine axial erfolgt. Eine derartige Zuführung des Abgases zur Turbine verhindert größere d. h. spürbare Druckverluste in der Abgasströmung. Die Verwendung einer Axialturbine zusammen mit einem derart ausgebildeten Eintrittsbereich gestattet zudem ein möglichst dichtes Packaging, insbesondere eine Reduzierung der Masse und der Länge der Abgasleitungen zwischen den Zylindern und der Turbine.

Jedoch kann auch bei Axialturbinen der Eintrittsbereich zur Zuführung des Abgases als rundum verlaufendes Spiral- oder Schneckengehäuse ausgebildet werden, insbesondere wenn die Einbausituation dies erfordert.

Vorteilhaft sind auch Ausführungsformen, bei denen die Turbine eine Radialturbine ist.

Im Folgenden wird die Erfindung anhand von zwei Ausführungsbeispielen gemäß den Figuren 1 bis 3 näher beschrieben. Hierbei zeigt:
- Fig. 1: in einer leicht angestellten Draufsicht den Sandkern der im Zylinderkopf integrierten Abgasleitungen gemäß einer ersten Ausführungsform der Kombination,
- Fig. 2: in einer perspektivischen Darstellung den in Figur 1 dargestellten Sandkern zusammen mit dem im Zylinderkopf integrierten Kühlmittelmantel, und
- Fig. 3: im Querschnitt eine zweite Ausführungsform der Kombination.

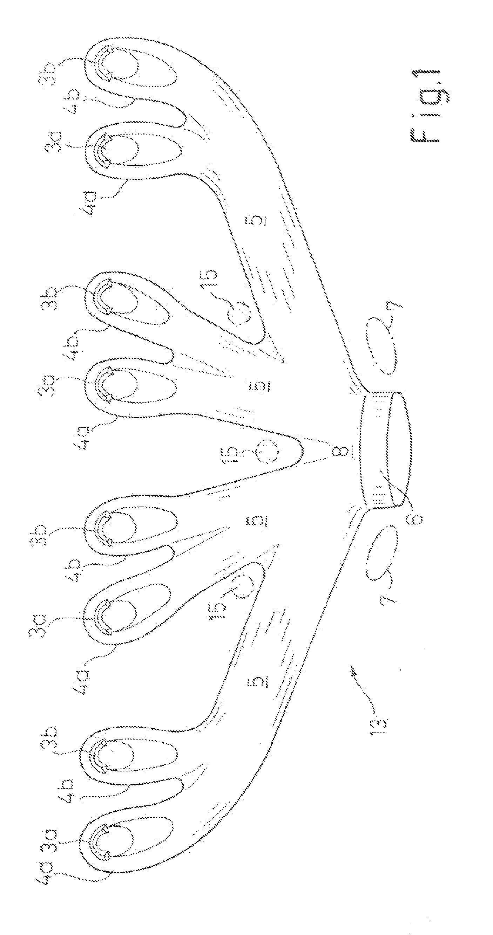

Figur 1 zeigt in einer leicht angestellten Draufsicht den Sandkern 13 der im Zylinderkopf integrierten Abgasleitungen 4a, 4b, 5, 6 gemäß einer ersten Ausführungsform der Kombination.

Somit veranschaulicht Figur 1 indirekt die im Zylinderkopf integrierten Abgasleitungen 4a, 4b, 5, 6, weshalb auch die Bezugszeichen für die Abgasleitungen 4a, 4b, 5, 6 verwendet werden.

Bei dem in Figur 1 dargestellten Sandkern 13 bzw. integrierten Abgaskrümmer handelt es sich um die Abgasleitungen 4a, 4b, 5, 6 eines Zylinderkopfes eines Vier-Zylinder-Reihenmotors. Jeder der vier Zylinder ist mit zwei Auslaßöffnungen 3a, 3b ausgestattet, wobei sich an jede Auslaßöffnung 3a, 3b eine Abgasleitung 4a, 4b anschließt.

Die Abgasleitungen 4a, 4b jedes Zylinders führen zu einer dem Zylinder zugehörigen Teilabgasleitung 5 zusammen, wobei die Teilabgasleitungen 5 anschließend d. h. stromabwärts wiederum zu einer gemeinsamen Gesamtabgasleitung 6 zusammenführen.

Zwischen den Teilabgasleitungen 5 von zwei benachbarten Zylindern können - beabstandet zu diesen Teilabgasleitungen 5 - optional Verbindungen 15 zwischen dem unteren Kühlmittelmantel und dem oberen Kühlmittelmantel vorgesehen werden (als strichpunktierte Kreise dargestellt). Diese optionalen Verbindungen 15 liegen auf der den Zylindern zugewandten Seite des Abgaskrümmers und innerhalb des Abgaskrümmers.

Die optionalen Verbindungen 15 unterstützen das Kühlen der thermisch hochbelasteten Sammelstelle 8, an der die Abgasströme sämtlicher Zylinder zusammenführen d. h. gesammelt werden. Das gesamte Abgas der Brennkraftmaschine passiert diese Sammelstelle 8 d.h. den Mündungsbereich 8 der Teilabgasleitungen 5, wo die Teilabgasleitungen 5 in die Gesamtabgasleitung 6 münden, wohingegen die Abgasleitungen 3a,3b eines Zylinders nur temporär von heißem Abgas durchströmt werden. Darüber hinaus werden die Abgasströmungen im Bereich der Sammelstelle 8 umgelenkt.

In einer Außenwandung des Zylinderkopfes, aus der die Gesamtabgasleitung 6 austritt, sind zwei Verbindungen 7 zwischen dem unteren Kühlmittelmantel und dem oberen Kühlmittelmantel vorgesehen, die wiederum dem Durchtritt von Kühlmittel dienen (als strichpunktierte Ellipsen dargestellt).

Die Verbindungen 7 sind benachbart zur Gesamtabgasleitung 6 d. h. zu dem Bereich 8 angeordnet, in dem die Abgasleitungen 4a, 4b, 5 zu der Gesamtabgasleitung 6 zusammenführen.

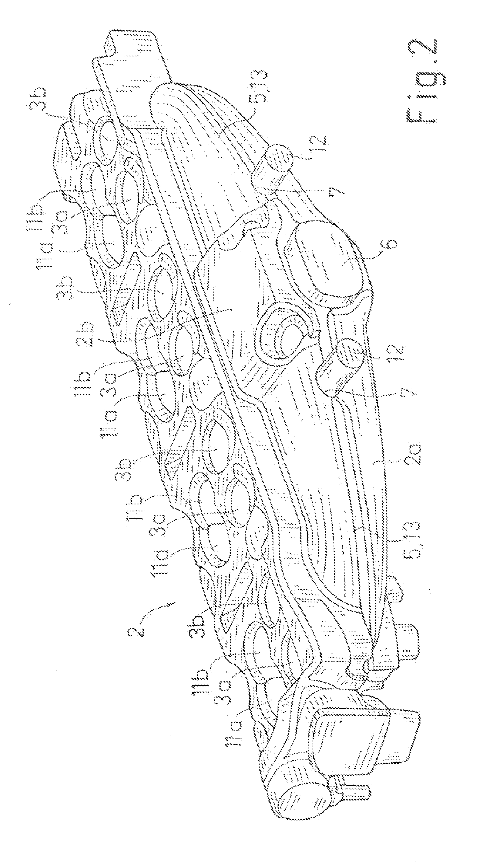

Figur 2 zeigt in einer perspektivischen Darstellung den in Figur 1 dargestellten Sandkern 13 zusammen mit dem im Zylinderkopf integrierten Kühlmittelmantel 2.

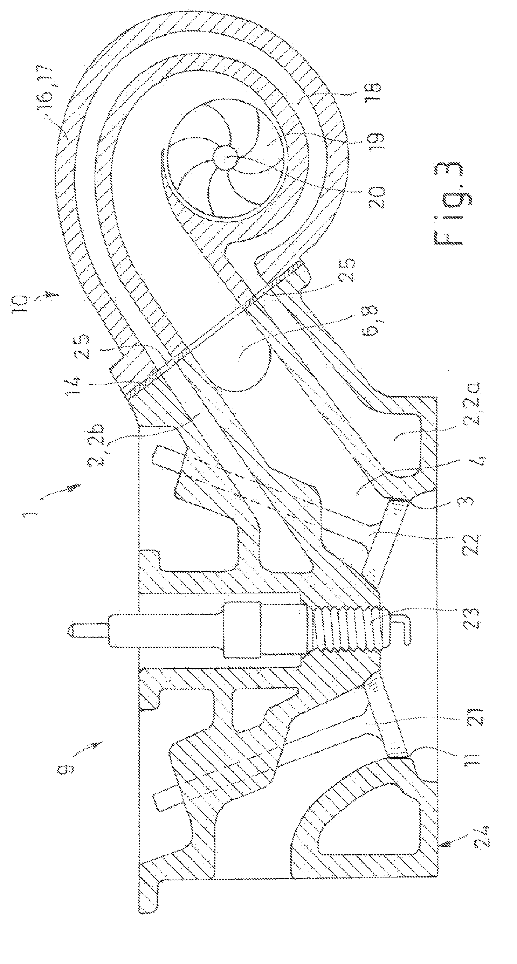

Der Kühlmittelmantel 2 umfaßt einen unteren Kühlmittelmantel 2a, der zwischen den Abgasleitungen 5 und einer nicht dargestellten Montage-Stirnseite des Zylinderkopfes (siehe Figur 3) angeordnet ist, und einen oberen Kühlmittelmantel 2b, der auf der dem unteren Kühlmittelmantel 2a gegenüberliegenden Seite der Abgasleitungen 5 angeordnet ist.

In der Außenwandung des Zylinderkopfes, aus der die Gesamtabgasleitung 6 austritt, sind zwei Verbindungen 7 zwischen dem unteren Kühlmittelmantel 2a und dem oberen Kühlmittelmantel 2b vorgesehen, die dem Durchtritt von Kühlmittel dienen.

Der untere und der obere Kühlmittelmantel 2a, 2b sind nicht über den gesamten Bereich der Außenwandung miteinander verbunden, sondern nur über einen Teilbereich der Außenwandung hinweg und zwar benachbart zur Gesamtabgasleitung 6.

Die beiden Verbindungen 7 sind damit benachbart zu dem Bereich angeordnet, in dem die Abgasleitungen 5 zu der Gesamtabgasleitung 6 zusammenführen d. h. dort, wo der Zylinderkopf thermisch besonders hoch belastet.

Die beiden Verbindungen 7 gestatten eine Kühlung auch im Bereich der Außenwandung des Zylinderkopfes, wobei die sich im oberen und unteren Kühlmittelmantel 2a, 2b einstellenden Längsströmungen - in Richtung der Längsachse des Zylinderkopfes - durch zwei Kühlmittelströmungen, die quer zu den Längsströmungen verlaufen, ergänzt werden. Die Strömungen des Kühlmittels sind mit Pfeilen kenntlich gemacht.

Zur Entfernung des Sandkerns 13 nach dem Gießen des Zylinderkopfes sind im Bereich der Verbindungen 7 zwei Zugänge 12 vorgesehen, die nach dem Entfernen des Sandkerns 13 verschlossen werden, so dass die Verbindungen 7 vollständig in der Außenwandung integriert sind. Die Zugänge 12 dienen während des Gießvorganges auch dazu, die Sandkerne 13 zu fixieren d.h. zu halten.

Zu erkennen ist auch, daß jeder Zylinder nicht nur zwei Auslaßöffnungen 3a, 3b, sondern auch zwei Einlaßöffnungen 11a, 11b aufweist.

Die beiden Kühlmantelverbindungen 25, über welche der im Zylinderkopf integrierte Kühlmittelmantel 2, 2a, 2b mit dem Kühlmittelmantel einer Turbine verbunden werden kann, sind angedeutet und befinden sich oberhalb bzw. unterhalb der Gesamtabgasleitung 6. Vorliegend wird der obere Kühlmittelmantel 2b des Zylinderkopfes und der untere Kühlmittelmantel 2a des Zylinderkopfes jeweils über eine Kühlmantelverbindung 25 mit der Flüssigkeitskühlung der Turbine d.h. dem im Turbinengehäuse vorgesehenen Kühlmittelmantel verbunden.

Figur 3 zeigt im Querschnitt eine zweite Ausführungsform der Kombination 1 mit einem Zylinderkopf 9 und einer Turbine 10. Der Zylinderkopf 9 ist an einer Montage-Stirnseite 24 mit einem Zylinderblock verbindbar, wobei die Turbine 10 mittels Flanschverbindung 14 am Zylinderkopf 9 befestigt ist. Folglich ist die Kombination 1 vorliegend modular aufgebaut und die Turbine 10 und der Zylinderkopf 9 stellen originär separate Bauteile dar, welche zur Ausbildung der Kombination 1 kraftschlüssig miteinander verbunden sind.

Der Zylinder wird via Einlaßöffnung 11, die von einem Einlaßventil 21 verschlossen bzw. freigegeben wird, im Rahmen des Ladungswechsels mit Frischgemisch versorgt. Das Ausschieben der Verbrennungsgase erfolgt via Auslaßöffnung 3, an welche sich eine Abgasleitung 4 anschließt und die von einem Auslaßventil 22 verschlossen bzw. freigegeben wird. Die Zündung wird mittels Fremdzündung unter Verwendung einer Zündkerze 23 initiiert.

Die Abgasleitungen 4 führen unter Ausbildung eines integrierten Abgaskrümmers innerhalb des Zylinderkopfes 9 zu einer Gesamtabgasleitung 6 zusammen, wobei die Gesamtabgasleitung 6 in den Eintrittsbereich der Turbine 10 mündet bzw. übergeht. Von dort werden die heißen Abgase dem auf einer Welle 20 angeordneten Turbinenlaufrad 19 mittels Spiralgehäuse 17 zugeführt, wodurch das Laufrad 19 in Drehung versetzt wird.

Der Zylinderkopf 9 ist mit einem integrierten Kühlmittelmantel 2, 2a, 2b ausgestattet, der mit einem im Turbinengehäuse 16 integrierten Kühlmittelmantel 18 verbunden ist.

Dabei weist der Kühlmittelmantel 2 des Zylinderkopfes 9 einen unteren Kühlmittelmantel 2a, der zwischen den Abgasleitungen 4, 6 und der Montage-Stirnseite 24 des Zylinderkopfes 9 angeordnet ist, und einen oberen Kühlmittelmantel 2b, der auf der dem unteren Kühlmittelmantel 2a gegenüberliegenden Seite der Abgasleitungen 4, 6 angeordnet ist, auf.

Sowohl der untere Kühlmittelmantel 2a als auch der obere Kühlmittelmantel 2b sind über Kühlmantelverbindungen 25 mit dem Kühlmittelmantel 18 der Turbine 10 verbunden.

Zur Förderung des Kühlmittels kann im unteren Kühlmittelmantel 2a des Zylinderkopfes 9 ein Überdruck generiert werden, so dass das Kühlmittel ausgehend vom unteren Kühlmittelmantel 2a via Kühlmantelverbindung 25 in den Kühlmittelmantel 18 der Turbine 10 eintritt, diesen Mantel 18 durchströmt und auf der der Montag-Stirnseite 24 abgewandten Seite des Abgaskrümmers via Kühlmantelverbindung 25 in den oberen Kühlmittelmantel 2b des Zylinderkopfes 9 eintritt.

### Bezugszeichen

- 1: Kombination
- 2: Kühlmittelmantel des Zylinderkopfes
- 2a: unterer Kühlmittelmantel
- 2b: oberer Kühlmittelmantel
- 3: Auslaßöffnung
- 3a: erste Auslaßöffnung
- 3b: zweite Auslaßöffnung
- 4: Abgasleitung
- 4a: erste Abgasleitung
- 4b: zweite Abgasleitung
- 5: Teilabgasleitung
- 6: Gesamtabgasleitung
- 7: Verbindung
- 8: Mündungsbereich, Sammelstelle
- 9: Zylinderkopf
- 10: Turbine
- 11: Einlaßöffnung
- 11a: erste Einlaßöffnung
- 11b: zweite Einlaßöffnung
- 12: Zugang
- 13: Sandkern
- 14: Flanschverbindung
- 15: optionale Verbindung
- 16: Turbinengehäuse
- 17: Spiralgehäuse
- 18: Kühlmittelmantel der Turbine
- 19: Laufrad
- 20: Welle
- 21: Einlaßventil
- 22: Auslaßventil
- 23: Zündkerze

- 24: Montagestirnseite
- 25: Kühlmantelverbindung

## Patentansprüche

1. Kombination (1) mit Zylinderkopf (9) und Turbine (10), bei der der Zylinderkopf (9)
- an einer Montage-Stirnseite (24) mit einem Zylinderblock verbindbar ist,
- mit einem zumindest teilweise im Zylinderkopf (9) integrierten Kühlmittelmantel (2, 2a, 2b) ausgestattet ist,
- mindestens zwei Zylinder aufweist, wobei jeder Zylinder mindestens eine Auslaßöffnung (3, 3a, 3b) zum Abführen der Abgase aus dem Zylinder aufweist und sich an jede Auslaßöffnung (3, 3a, 3b) eine Abgasleitung (4, 4a, 4b) anschließt, und bei dem
- die Abgasleitungen (4, 4a, 4b, 5) von mindestens zwei Zylindern unter Ausbildung eines integrierten Abgaskrümmers innerhalb des Zylinderkopfes (9) zu einer Gesamtabgasleitung (6) zusammenführen,
**dadurch gekennzeichnet, dass**
- die ein Turbinengehäuse (16) aufweisende Turbine (10) zur Ausbildung einer Flüssigkeitskühlung mit einem Kühlmittelmantel (18) ausgestattet ist, wobei der im Zylinderkopf (9) integrierte Kühlmittelmantel (2, 2a, 2b) mit dem Kühlmittelmantel (18) der Turbine (10) verbunden ist.

2. Kombination (1) nach Anspruch 1,
**dadurch gekennzeichnet, dass**
der im Zylinderkopf (9) integrierte Kühlmittelmantel (2) einen unteren Kühlmittelmantel (2a), der zwischen den Abgasleitungen (4, 4a, 4b, 5, 6) und der Montage-Stirnseite (24) des Zylinderkopfes (9) angeordnet ist, und einen oberen Kühlmittelmantel (2b), der auf der dem unteren Kühlmittelmantel (2a) gegenüberliegenden Seite der Abgasleitungen (4, 4a, 4b, 5, 6) angeordnet ist, aufweist.

3. Kombination (1) nach Anspruch 2,
**dadurch gekennzeichnet, dass**
der untere Kühlmittelmantel (2a) und/oder der obere Kühlmittelmantel (2b) mit dem Kühlmittelmantel (18) der Turbine (10) verbunden sind.

4. Kombination (1) nach Anspruch 2 oder 3,
**dadurch gekennzeichnet, dass**
beabstandet zu den Abgasleitungen (4, 4a, 4b, 5, 6) auf der den mindestens zwei Zylindern abgewandten Seite des integrierten Abgaskrümmers mindestens eine Verbindung (7) zwischen dem unteren Kühlmittelmantel (2a) und dem oberen Kühlmittelmantel (2b) vorgesehen ist, die dem Durchtritt von Kühlmittel dient.

5. Kombination (1) nach Anspruch 4,
**dadurch gekennzeichnet, dass**
der Abstand zwischen der mindestens einen Verbindung (7) und der Gesamtabgasleitung (6) kleiner ist als der halbe Durchmesser eines Zylinders.

6. Kombination (1) nach Anspruch 4 oder 5,
**dadurch gekennzeichnet, dass**
mindestens zwei Verbindungen (7) vorgesehen sind, die auf gegenüberliegenden Seiten der Gesamtabgasleitung (6) angeordnet sind.

7. Kombination (1) nach einem der vorherigen Ansprüche,
**dadurch gekennzeichnet, dass**
die Turbine (10) und der Zylinderkopf (9) separate Bauteile darstellen, welche zur Ausbildung der Kombination (1) kraftschlüssig, formschlüssig und/oder stoffschlüssig miteinander verbunden sind.

8. Kombination (1) nach einem der Ansprüche 1 bis 6,
**dadurch gekennzeichnet, dass**
das Turbinengehäuse (18) zumindest teilweise im Zylinderkopf (9) integriert ist, so dass der Zylinderkopf (9) und zumindest ein Teil des Turbinengehäuses (18) ein monolithisches Bauteil bilden.

9. Kombination (1) nach einem der vorherigen Ansprüche,
**dadurch gekennzeichnet, dass**
jeder Zylinder mindestens zwei Auslaßöffnungen (3, 3a, 3b) zum Abführen der Abgase aus dem Zylinder aufweist.

10. Kombination (1) nach Anspruch 9,
**dadurch gekennzeichnet, dass**
zunächst die Abgasleitungen (4, 4a, 4b) der mindestens zwei Auslaßöffnungen (3, 3a, 3b) zu einer dem Zylinder zugehörigen Teilabgasleitung (5) zusammenführen bevor die Teilabgasleitungen (5) von mindestens zwei Zylindern zu der Gesamtabgasleitung (6) zusammenführen.

11. Kombination (1) nach einem der Ansprüche 2 bis 10,
**dadurch gekennzeichnet, dass**
beabstandet zu den Abgasleitungen (4, 4a, 4b, 5, 6) auf der den mindestens zwei Zylindern zugewandten Seite des integrierten Abgaskrümmers mindestens eine Verbindung (7) zwischen dem unteren Kühlmittelmantel (2a) und dem oberen Kühlmittelmantel (2b) vorgesehen ist, die dem Durchtritt von Kühlmittel dient.

12. Kombination (1) nach einem der vorherigen Ansprüche,
**dadurch gekennzeichnet, dass**
eine Abgriffstelle zur Entnahme von Abgas im Zylinderkopf (9) an dem integrierten Abgaskrümmer vorgesehen ist, an der zumindest ein Teil des aus den Zylindern abgeführten Abgases dem Abgaskrümmer innerhalb des Zylinderkopfes (9) entnehmbar ist, wobei sich stromabwärts der Abgriffstelle eine Bypaßleitung anschließt, mit der das entnommene Abgas an der Turbine (10) vorbeiführbar ist.

13. Kombination (1) nach einem der vorherigen Ansprüche,
**dadurch gekennzeichnet, dass**
eine Leitung zur Rückführung von Abgas im Zylinderkopf (9) vorgesehen ist, die von dem im Zylinderkopf (9) integrierten Abgaskrümmer abzweigt und mit der zumindest ein Teil des aus den Zylindern abgeführten Abgases dem Abgaskrümmer innerhalb des Zylinderkopfes (9) entnehmbar ist.

## Geänderte Patentansprüche

### Geänderte Patentansprüche gemäss Regel 137(2) EPÜ.

**1.** Kombination (1) mit Zylinderkopf (9) und Turbine (10), bei der der Zylinderkopf (9)
- an einer Montage-Stirnseite (24) mit einem Zylinderblock verbindbar ist,
- mit einem zumindest teilweise im Zylinderkopf (9) integrierten Kühlmittelmantel (2, 2a, 2b) ausgestattet ist,
- mindestens zwei Zylinder aufweist, wobei jeder Zylinder mindestens eine Auslaßöffnung (3, 3a, 3b) zum Abführen der Abgase aus dem Zylinder aufweist und sich an jede Auslaßöffnung (3, 3a, 3b) eine Abgasleitung (4, 4a, 4b) anschließt, und bei dem
- die ein Turbinengehäuse (16) aufweisende Turbine (10) zur Ausbildung einer Flüssigkeitskühlung mit einem Kühlmittelmantel (18) ausgestattet ist, wobei der im Zylinderkopf (9) integrierte Kühlmittelmantel (2, 2a, 2b) mit dem Kühlmittelmantel (18) der Turbine (10) verbunden ist,
**dadurch gekennzeichnet, dass**
- die Abgasleitungen (4, 4a, 4b, 5) sämtlicher Zylinder des Zylinderkopfes (9) unter Ausbildung eines integrierten Abgaskrümmers innerhalb des Zylinderkopfes (9) zu einer gemeinsamen Gesamtabgasleitung (6) zusammenführen,
- der im Zylinderkopf (9) integrierte Kühlmittelmantel (2) einen unteren Kühlmittelmantel (2a), der zwischen den Abgasleitungen (4, 4a, 4b, 5, 6) und der Montage-Stirnseite (24) des Zylinderkopfes (9) angeordnet ist, und einen oberen Kühlmittelmantel (2b), der auf der dem unteren Kühlmittelmantel (2a) gegenüberliegenden Seite der Abgasleitungen (4, 4a, 4b, 5, 6) angeordnet ist, aufweist, und
- der untere Kühlmittelmantel (2a) und der obere Kühlmittelmantel (2b) mit dem Kühlmittelmantel (18) der Turbine (10) verbunden sind.
